# EUROPEAN PATENT APPLICATION

(11) **EP 4 209 628 A1**
(43) Date of publication of application: **12.07.2023**
(21) Application number: 23150614.8
(22) Date of filing: 06.01.2023
(51) Int. Cl.: D02G 3/44

(54) **A BRAIDED TWINE AND METHOD FOR PREPARING THE SAME FOR FISHING AND AQUACULTURE APPLICATIONS**

(30) Priority: 07.01.2022 IN 202221001013
(71) Applicant: Garware Technical Fibres Limited, Pune, Maharashtra 411019 (IN)
(72) Inventor: DARDA, Kishor, 411048 Pune (IN); BHUTE, Aniket, 416116 Ichalkaranji (IN)
(74) Representative: Bryers LLP

(57) **Abstract**

The present disclosure provides a braided twine (100) that includes a twine core (102), a braided sheath (106) configured around the twine core (102), and an intermediate film (104) configured between the twine core (102) and braided sheath (106) to bridge a gap between the twine core (102) and the braided sheath (106).

## Description

### TECHNICAL FIELD

The present disclosure relates to the field of fishing nets and aquaculture nets. In particular, the present disclosure relates to a braided twine or rope or cord required for nets for fishing and aquaculture applications.

### BACKGROUND

Background description includes information that may be useful in understanding the present invention. It is not an admission that any of the information provided herein is prior art or relevant to the presently claimed invention, or that any publication specifically or implicitly referenced is prior art.

A braided twine (interchangeably referred to as twine) or cord is typically made of synthetic materials like nylon, polypropylene, HDPE or any other synthetic materials, and includes a core and a cover wound around the core. The twine is mainly used for manufacturing aquaculture and fishing nets (also referred to as netting) for applications like, fish nets, trawls, codend part bottom trawling nettings, aquaculture cages etc., which is one of the most common techniques used to catch fishes.

Furthermore, during trawling, the netting offers resistance to movement through water, which produces higher netting drag. The higher netting drag increases fuel consumption and requires operating engines at higher speed which reduces engine life. Further, adding more material to the twine for prevention of fatigue failure of the twine is not cost effective as it increases the netting's bulk with corresponding increase in fuel cost, reduction in engine life and the cost of manufacture of the netting. Also, the mud ingress in the twine structure in the netting results in the shrinkage in the netting especially in the application such as codend.

To improve the life of the twine, the core is applied with an adhesive before making braided twine. However, such a method requires a lengthy process of melting of the adhesive, passing the core through the molten adhesive, allowing the adhesive to solidify before twisting the filaments around the core. It would therefore be desirable to provide a more efficient, cost effective and less time-consuming process.

Therefore, there is a requirement of an improved method for preparing a round braided twine for fishing and aquaculture applications that results in reduced production time, and higher rigidity and better roundness, less mud ingress with minimum shrinkage.

All publications herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all Markush groups used in the appended claims.

### OBJECTS OF THE INVENTION

A general object of the present disclosure is to provide an improved method for preparing braided twine for fishing and aquaculture applications.

Another object of the present disclosure is to provide a method for preparing a braided twine for aquaculture and fishing nets, which offers less drag.

Another object of the present disclosure is to provide a method for preparing a braided twine for aquaculture and fishing nets, which offers less mud ingress and higher cut resistance.

An object of the present disclosure is to provide a method for preparing braided twine for aquaculture and fishing nets that require lesser production time as compared to the conventional methods.

Another object of the present disclosure is to provide a method for preparing braided twine having higher stiffness or rigidity.

Another object of the present disclosure is to provide a method for preparing braided twine having better roundness of the twine.

### SUMMARY

Aspects of the present disclosure relate to a braided twine for fishing application and a method for preparing the same.

The present disclosure provides a method for wrapping core filaments with an intermediate film to improve the roundness of twine and mechanical properties of the twine. As a result, the drag force is reduced on the netting during trawling with low shrinkage of the nettings.

In an aspect, the present disclosure provides a braided twine that includes a twine core, a braided sheath configured around the core, and an intermediate film configured between the twine core and braided sheath to bridge a gap between the twine core and the braided sheath.

In an embodiment, the twine core is made of any or a combination of a thermoplastic material and a synthetic material.

In an embodiment, the intermediate film is configured with the braided sheath with an adhesive.

In an embodiment, each of the twine core and braided twine is made of any of filaments, strands, and yarns, wherein each of the filaments, strands, and yarns is made of polymers, and wherein the polymers comprises any or a combination of polyester, polyolefin, amides, imides, natural origin or synthetic origin or semi synthetic origin, high density polyethylene (HDPE), aramid, copolymer aramid, a polyether, polyethylene, a polyethylene terephthalate, a polyamide filament, a polyvinyl alcohol filament.

In an embodiment, the material of the twine core and the braided sheath is selected such that softening temperature of the core is less than softening temperature of the core.

In an embodiment, the film is made of nonwoven fabric, braided tape, and synthetic material.

In an embodiment, the braided twine is subjected to heating to a temperature greater than softening temperature of the core but less than the softening temperature of the filaments, resulting in the braided filaments getting pressed into the core under tension of the braiding.

In another aspect, the present disclosure provides a method for preparing braided twine. The method includes: forming a core by twisting one of filaments, strands, and yarns; forming the film over the core; and forming a braided sheath over the film by introducing the core covered by the film into a braided machine to form the braided twine.

In an embodiment, the method includes heating the braided twine to a temperature greater than softening temperature of the core but less than the softening temperature of the filaments, resulting in the braided filaments getting pressed into the core under tension of the braiding.

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIGs. 1A and 1B illustrate an isometric view and cross-section view of a braided twine, respectively, in accordance with the embodiment of the present disclosure.
FIGs. 2A and 2B illustrate exemplary representations of core and core with an intermediate film, respectively, in accordance with the embodiment of the present disclosure.
FIG. 3 illustrates an exemplary flow diagram of a method for preparing a braided twine for fishing and aquaculture applications, in accordance with the embodiment of the present disclosure.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims.

Various terms are used herein. To the extent a term used in a claim is not defined, it should be given the broadest definition persons in the pertinent art have given that term as reflected in printed publications and issued patents at the time of filing.

Embodiments explained herein relate to a braided twine for aquaculture and fishing nets and method for preparing the braided twine. The braided twine may include a twine core, a braided sheath configured around the core, and an intermediate film configured between the core and braided cover to bridge a gap between the core and the braided cover. The twine core is wrapped with an intermediate film of synthetic material or natural material. The material of the core and braided sheath is selected such that softening temperature of the wrapped film is less than that of the braided sheath. Such selection is required mostly in cases where the core and braided sheath are made of thermoplastic materials. Upon braiding, the braided twine is subjected to heating to a temperature higher than softening temperature of the core but less than the softening temperature of the filaments, which results in the braided filaments getting pressed into the core under tension of the braiding, thereby enabling efficient and effective sealing of openings between the filaments. In this manner, a well-rounded twine having higher stiffness or rigidity is achieved.

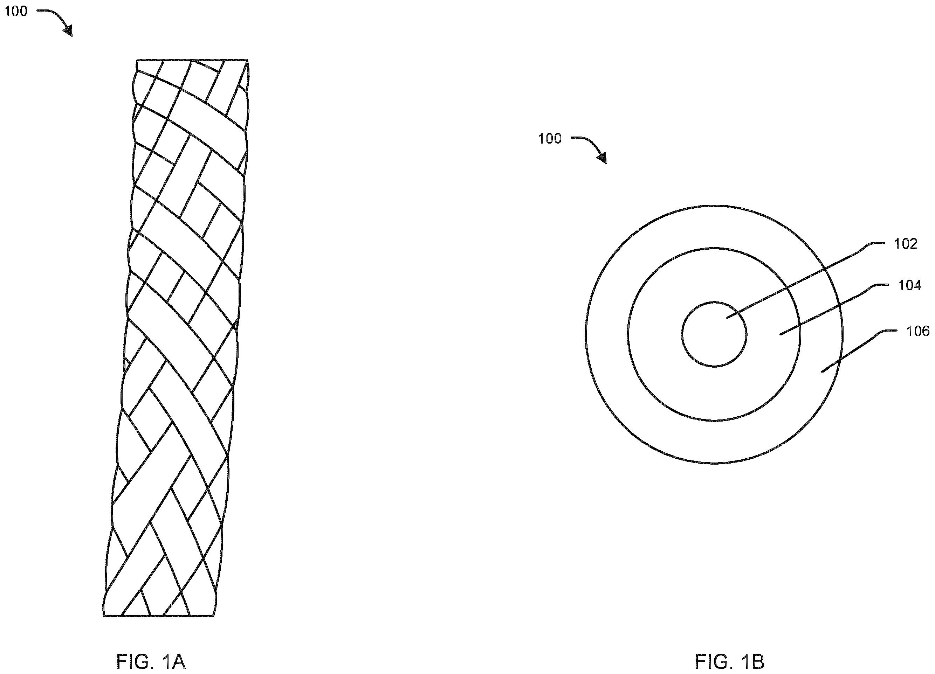

FIGs. 1A and 1B illustrate an isometric view and cross-section view of a braided twine, respectively, in accordance with the embodiment of the present disclosure. As illustrated in FIGs. 1A and 1B, the braided twine 100 may include a twine core 102, a braided sheath 106 configured around the twine core 102, and an intermediate film 104. The intermediate sheath 104 may be configured between the twine core 102 and braided cover to bridge a gap between the core and the braided cover.

In an embodiment, the strength of the braided twine 100 may be associated with the twine core 102. Thus, the strength of the twine 100 may be increased by modification of the size and construction of the twine core 102.

In an embodiment, the material for the core 102 may be selected based on properties required for a particular application of the cord / twine. The twine core is made of any or a combination of a thermoplastic material and a synthetic material such as polymer material. In case of the polymer composition, the core may be formed through weaving, braiding, and/or twisting either monofilament or multifilament, in accordance with the tailoring of the braided sheath to effectively sharing of the load between the twine core 102 and braided sheath 106. The twine core 102 may be made of filaments or yarns of high performance polymers to provide a combination of high tensile strength, high tenacity and low creep to the braided sheath. In an example, the polymer for the twine core 102 may be, by way of example but not limited to, selected from the group consisting of a polymeric/synthetic filaments such as fibres or filaments like polyester, polyolefin, amides, imides, natural origin or synthetic origin or semi synthetic origin with fineness, high density polyethylene (HDPE), aramid filament, copolymer aramid filament, a polyether filament, ultra-high molecular weight polyethylene filament, a high modulus polyethylene filament, a polypropylene filament, a polyethylene terephthalate filament, a polyamide filament, a high-strength polyvinyl alcohol filament and combinations thereof.

In an embodiment, the braided sheath 106 may have, by way of example but not limited to, tubular structure. The braided sheath may be made of filaments such as - monofilament or multifilament, or yarns of high performance polymers to provide a combination of high tensile strength, high tenacity and low creep to the braided sheath. The monofilament may be twisted, where the multifilament structure may be braided and/or twisted.

In an exemplary embodiment, the polymer for the braided sheath may be, by way of example but not limited to, selected from the group comprising of a polymeric/synthetic filaments such as fibres or filaments like polyester, polyolefin, amides, imides, natural origin or synthetic origin or semi synthetic origin with fineness, high density polyethylene (HDPE), aramid filament, copolymer aramid filament, a polyether filament, ultra-high molecular weight polyethylene filament, a high modulus polyethylene filament, a polypropylene filament, a polyethylene terephthalate filament, a polyamide filament, a high-strength polyvinyl alcohol filament and combinations thereof.

In an embodiment, the intermediate film is configured with the braided sheath with an adhesive. The intermediate film 104 may be, by way of example but not limited to, made of nonwoven fabric, braided tape, and synthetic material such as but not limited to, plastic, polymeric film, paper, adhesive tape or any other film or fabric without coating or with coating like binders/ adhesives, thermoplastic adhesives/binders, antimicrobial, antifouling, flame retardant. The intermediate film 104 may be made of any other material that helps in improving the roundness, less mud-ingress of twine and mechanical properties of the twine. The intermediate film may include smooth surface, rough surface, grooved surface, embossed surface, dot coated or any other texture/ pattern

In some embodiments, the width of the intermediate film 103 may be, by way of example but not limited to, ranging from 2mm to 500mm, whereas the thickness of the intermediate film may be, by way of example but not limited to, not limited to 0.005 to 5 mm.

In an embodiment, where the braided sheath 106 may be coupled with the intermediate film 104 through an adhesive such as glue, the braided twine is heated to liquify the adhesive. Upon liquefication of the adhesive, the braided twine is allowed to cool the adhesive for solidification. As a result, the adhesive binds the adjacent fiber, thus sealing the core. In such cases, the braided twine is heated to a temperature greater than softening temperature of the core but less than the softening temperature of the braided sheath, resulting in the braided filaments getting pressed into the core under tension of the braiding. In such cases, the material of the core and the braided sheath is selected such that softening temperature of the core is less than softening temperature of the core. In an example, the temperature associated with the liquefication of adhesive is ranging between 70°C - 180°C.

In an embodiment, when the twine is in a relaxed state i.e. no tension is applied on the twine 100, there is open volume present in the hollow portion of the braided sheath not occupied by the twine core, the braid angle of the braided sheath may be ranging from about 4° to about 95°. However, when a longitudinal tension is applied to the twine, the applied tension results in transition of the twine into a longitudinal tensioned state in which the braided sheath is elongated such that the braid angle is increased and the pick count is decreased, where the pick count is a property of sheath that indicates the compactness of the sheath. Moreover, due to the elongation the diameter of the braided sheath constricts such that at least portions of the inner surface of the braided sheath contact and cinch the core member.

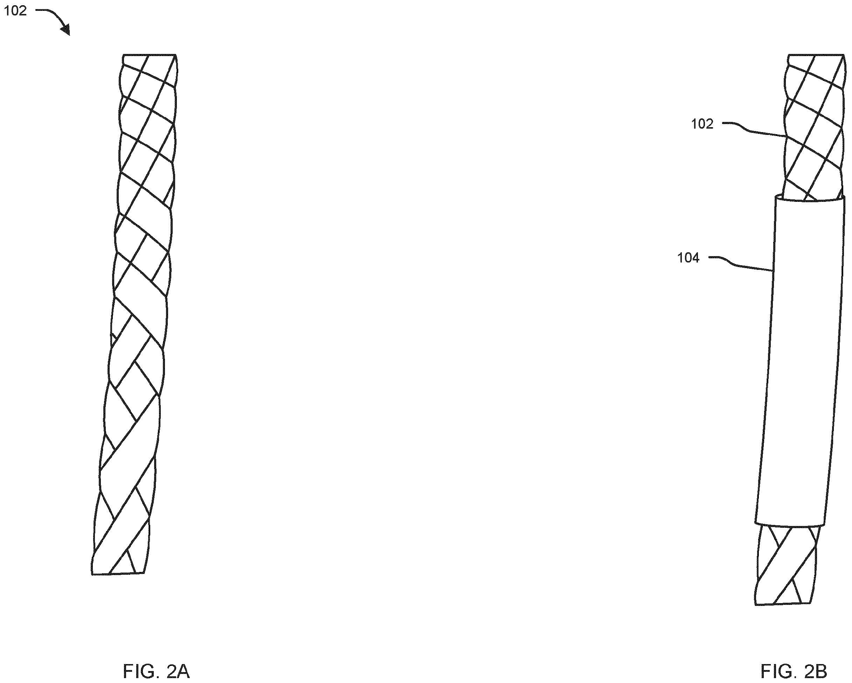

FIGs. 2A and 2B illustrate exemplary representations of core and core with intermediate film, respectively, in accordance with the embodiment of the present disclosure. FIG. 2A shows the core 102 that is formed through twisting filaments or yarns or strands, whereas FIG. 2B shows the core 102 is wrapped with an intermediate film. The intermediate film acts as an additional layer that bridges the gap between the twine core and the braided sheath and reduces the mud ingress. The reduction in the mud ingress restricts mud or sand particles to enter into the twine core, which results in lower shrinkage of twine and nettings. The intermediate film over the core improves cohesion of the core filaments. As a result, the braided twine with higher stiffness, higher cut resistance and better roundness of the twine, thereby reducing the drag force on the netting during trawling with low shrinkage of the netting.

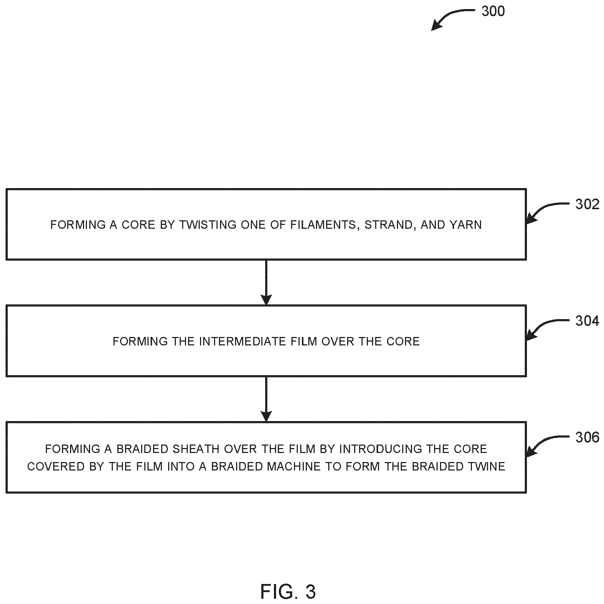

FIG. 3 illustrates an exemplary flow diagram of a method for manufacturing braided twine for fishing and aquaculture applications, in accordance with the embodiment of the present disclosure.

The method 300 includes the step 302 of forming a core by twisting one of filaments, strands, and yarns. At step 304, the film is formed over the core. At step 306, a braided sheath is formed over the film by introducing the core covered by the film into a braided machine.

In an embodiment, the method comprises heating the braided twine to a temperature greater than softening temperature of the core but less than the softening temperature of the filaments, resulting in the braided filaments of the intermediate films getting pressed into the core under tension of the braiding. The tension in the filaments created during the braiding combined with the softening of the core results in the braided filaments of the intermediate film getting pressed into the core under tension of the braiding, thereby efficient and effective sealing of openings between the filaments. This results in higher rigidity and better roundness of the twine.

Thus, the present disclosure provides a braided twine for manufacturing round braided twine for fishing and aquaculture applications with properties such as roundness of the twine, where round braided twine offers less drag, less mud ingress, and higher stiffness or rigidity. Less mud ingress netting restricts mud / slit / sand particles to enter into the twine body, which results in lower shrinkage of twine and nettings.

This improved method for manufacturing round braided twine for fishing and aquaculture applications with benefits like better roundness of the twine, round braided twine will offer less drag, less mud ingress, higher stiffness or rigidity. Less mud ingress netting limits mud / slit / sand particles to enter into the twine body, which results in lower shrinkage of twine and nettings.

It would be appreciated that the embodiments herein are explained with respect to aquaculture and fishing applications like, cages, bottom trawling etc., however, the proposed braided twine can be implemented in any other applications, without departing from the scope of the invention.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE INVENTION

The present disclosure provides an improved method for preparing round braided twine for fishing and aquaculture applications.

The present disclosure provides a method for preparing a round braided twine for aquaculture and fishing nets, which offers less drag.

The present disclosure provides a method for preparing a round braided twine for aquaculture and fishing nets, which offers less mud ingress and higher cut resistance.

The present disclosure provides a method for preparing round braided twine for aquaculture and fishing nets that require lesser production time as compared to the conventional methods.

The present disclosure provides a method for preparing round braided twine having higher stiffness or rigidity.

The present disclosure provides a method for manufacturing round braided twine having better roundness of the twine.

## Claims

1. A braided twine (100) comprising:
a twine core (102);
a braided sheath (106) configured around the twine core (102); and
an intermediate film (104) configured between the twine core (102) and braided sheath (106) to bridge a gap between the twine core (102) and the braided sheath (106).

2. The braided twine (100) as claimed in claim 1, wherein the twine core (102) is made of any or a combination of a thermoplastic material and a synthetic material.

3. The braided twine (100) as claimed in claim 1, wherein the intermediate film (104) is configured with the braided sheath (106) with an adhesive.

4. The braided twine (100) as claimed in claim 1, wherein each of the twine core (102) and braided twine (100) is made of any of filaments, strands, and yarns, wherein each of the filaments, strands, and yarns is made of polymers, and wherein the polymers comprises any or a combination of polyester, polyolefin, amides, imides, natural origin or synthetic origin or semi synthetic origin, high density polyethylene (HDPE), aramid, copolymer aramid, a polyether, polyethylene, a polyethylene terephthalate, a polyamide filament, a polyvinyl alcohol filament.

5. The braided twine (100) as claimed in claim 1, wherein the material of the twine core (102) and the braided sheath (106) is selected such that softening temperature of the core (102) is less than softening temperature of the core (102).

6. The braided twine (100) as claimed in claim 1, wherein the film is made of nonwoven fabric, braided tape, and synthetic material.

7. The braided twine (100) as claimed in claim 7, wherein the braided twine (100) is subjected to heating to a temperature greater than softening temperature of the core (102) but less than the softening temperature of the filaments, resulting in the braided filaments getting pressed into the core (102) under tension of the braiding.

8. A method for preparing braided twine (100), the method comprising:
forming (302) a core (102) by twisting one of filaments, strands, and yarns;
forming (304) the intermediate film (104) over the core (102); and
forming (306) a braided sheath (106) over the film by introducing the core (102) covered by the film into a braided machine to form the braided twine (100).

9. The method as claimed in claim 8, wherein the method comprises heating the braided twine (100) to a temperature greater than softening temperature of the core (102) but less than the softening temperature of the filaments, resulting in the braided filaments getting pressed into the core (102) under tension of the braiding.
